# EUROPEAN PATENT APPLICATION

(11) **EP 4 696 905 A1**
(43) Date of publication of application: **18.02.2026**
(21) Application number: 24788403.4
(22) Date of filing: 08.02.2024
(51) Int. Cl.: F16H 25/24, F16H 25/22, F16J 15/18

(54) **SEAL MEMBER FOR BALL SCREW, AND BALL SCREW**

(30) Priority: 14.04.2023 JP 2023066365
(71) Applicant: NSK LTD., Tokyo 141-8560 (JP)
(72) Inventor: OKA Keitaro, Fujisawa-shi, Kanagawa 251-8501 (JP)
(74) Representative: Grünecker Patent- und Rechtsanwälte PartG mbB
(86) International application number: PCT/JP2024/004318
(87) International publication number: WO 2024/214373

(57) **Abstract**

This seal member for a ball screw comprises: an annular seal body section that is fixed to the inner circumferential surface of at least one axial-direction end portion of a nut, and a seal ridge section that is circumferentially formed on the inner-diameter side of the seal body section so as to be fitted into a screw groove of a screw shaft, and forms a labyrinth gap between the seal ridge section and the screw groove of the screw shaft, wherein the seal crest section has a hollow section circumferentially formed therein, the hollow section being formed by notching the seal crest section from one axial-direction side. As a result, more grease can be held, thereby achieving a long period of stable lubrication.

## Description

### TECHNICAL FIELD

The present invention relates to a ball screw seal member and a ball screw.

### BACKGROUND ART

In the related art, a ball screw that converts rotational motion into linear motion generally includes a screw shaft having a spiral screw groove formed on an outer peripheral surface and a nut having a spiral screw groove formed on an inner peripheral surface, and plural balls that roll with a rotational motion of the screw shaft or the nut are loaded between the two screw grooves of the screw shaft and the nut.

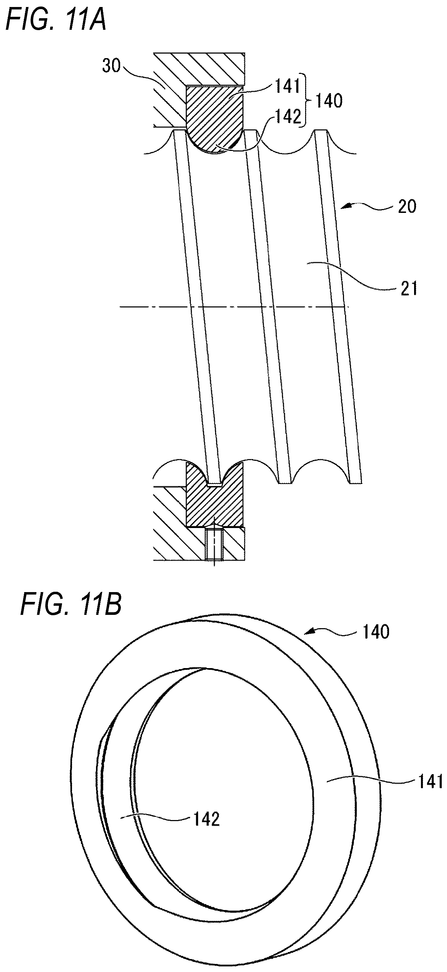

As illustrated in FIGS. 11A and 11B, a seal member 140 is usually attached to an end portion of a nut 30 of a ball screw, and has two functions of restricting grease leakage from an inside of the nut 30 and preventing foreign matter from entering the nut 30. The general-purpose seal member 140, which is formed of resin, includes a seal body portion 141 to be attached to the end portion of the nut 30 and a seal crest portion 142 that enters a screw groove 21 of a screw shaft 20, and has a structure in which a minute clearance is provided between the seal body portion 141 and the screw groove 21 of the screw shaft 20. Such a ball screw is usually lubricated by grease accumulated in a clearance inside the nut when grease is not automatically supplied at regular intervals.

In a feed screw device described in Patent Literature 1, a seal member is implemented by a lubricant-containing polymer member and is formed with a lubricant reservoir portion in a position other than a part of the lubricant-containing polymer member which comes into contact with a to-be-sealed surface of a screw shaft, and supplies lubricant sealed in the lubricant reservoir portion by being impregnated with the lubricant. Further, in a ball screw described in Patent Literature 2, it is described that a deformation groove is formed on each of a seal body portion side and a seal crest side of a dustproof unit to facilitate insertion into a screw groove of a nut or a screw shaft.

### CITATION LIST

### PATENT LITERATURE

Patent Literature 1: JP3648855B
Patent Literature 2: Chinese Utility Model Patent No. 209430705 Specification

### SUMMARY OF INVENTION

### TECHNICAL PROBLEM

In a ball screw, a larger space for retaining grease inside a nut facilitates lubricant supply, which is preferable. On the other hand, when extra space is provided in the nut, an entire length of the nut is increased, leading to issues such as compromising space-saving design.

In Patent Literature 1, although the lubricant reservoir portion is provided on a seal body portion side, further improvement is required to retain and supply more grease since the lubricant reservoir portion is relatively small and is separated from an inner peripheral surface of a seal crest portion. In Patent Literature 2, a deformation groove of a seal crest portion is formed in consideration of insertability, and it is not possible to retain more grease.

The present invention is made in view of the above-described problems, and an object of the present invention is to provide a ball screw seal member and a ball screw that can retain more grease and achieve long-term stable lubrication.

### SOLUTION TO PROBLEM

The above object of the present invention is achieved by following configurations.
[1] Provided is a ball screw seal member used for a ball screw, the ball screw including a screw shaft having a spiral screw groove formed on an outer peripheral surface, a nut having a spiral screw groove formed on an inner peripheral surface, and a plurality of balls configured to roll on a load raceway defined by the screw groove of the screw shaft and the screw groove of the nut, to seal a clearance between the screw shaft and the nut, the seal member including:
   an annular seal body portion configured to be fixed to an inner peripheral surface of an end portion of the nut in an axial direction; and
   a seal crest portion formed on an inner diameter side of the seal body portion along a circumferential direction to enter the screw groove of the screw shaft, the seal crest portion defining a labyrinth clearance with the screw groove of the screw shaft, in which
   the seal crest portion is formed with, along the circumferential direction, a cavity portion cut out from one side in the axial direction.
[2] Provided is a ball screw including:
   a screw shaft having a spiral screw groove formed on an outer peripheral surface;
   a nut having a spiral screw groove formed on an inner peripheral surface;
   a plurality of balls configured to roll on a load raceway defined by the screw groove of the screw shaft and the screw groove of the nut; and
   the ball screw seal member according to [1] sealing a clearance between the screw shaft and the nut, in which
   the cavity portion opens toward a space between the screw groove of the screw shaft and the screw groove of the nut.

### ADVANTAGEOUS EFFECTS OF INVENTION

According to the ball screw seal member and the ball screw of the present invention, the cavity portion retains more grease, oil content of grease accumulated in the cavity portion is gradually supplied to the space between the screw groove of the screw shaft and the screw groove of the nut, and stable lubrication can be implemented over a long period.

### BRIEF DESCRIPTION OF DRAWINGS

FIG. 1 is a front view of a ball screw according to a first embodiment of the present invention.
FIG. 2 is a cross-sectional view illustrating a state in which a seal member illustrated in FIG. 1 is attached to a nut.
FIG. 3A is a perspective view of the seal member, and FIG. 3B is a side view of the seal member.
FIG. 4 is a cross-sectional view taken along a line VI-VI in FIG. 3B.
FIG. 5A is a perspective view of a seal member according to a first modification, and FIG. 5B is a side view of the seal member in FIG. 5A.
FIG. 6A is a cross-sectional view taken along a line VIa-VIa in FIG. 5B, FIG. 6B is a cross-sectional view taken along a line VIb-VIb in FIG. 5B, FIG. 6C is a cross-sectional view taken along a line VIc-VIc in FIG. 5B, and FIG. 6D is a cross-sectional view taken along a line VId-VId in FIG. 5B.
FIG. 7 is a perspective view of a seal member according to a second modification.
FIG. 8A is a perspective view of a seal member according to a third modification, and FIG. 8B is a side view of the seal member in FIG. 8A.
FIG. 9 is a side view of a seal member according to a fourth modification.
FIG. 10 is a cross-sectional view of a seal member according to a fifth modification.
FIG. 11A illustrates a state in which a seal member in the related art is attached to a nut, and FIG. 11B is a perspective view of the seal member in the related art.

### DESCRIPTION OF EMBODIMENTS

Hereinafter, an embodiment of a ball screw according to the present invention will be described in detail with reference to the drawings.

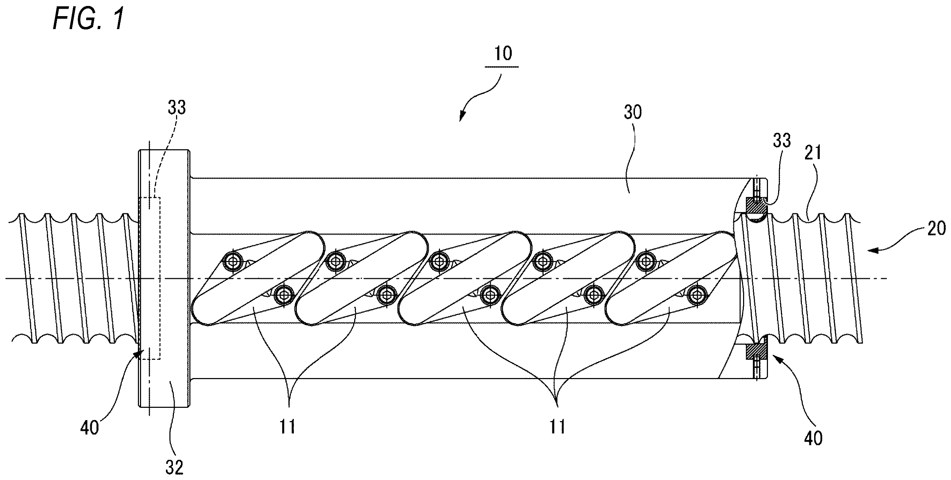

As illustrated in FIG. 1, a ball screw 10 in the present embodiment includes a screw shaft 20 that extends in an axial direction and has a spiral screw groove 21 on an outer peripheral surface, a nut 30 that has a spiral screw groove (not illustrated) corresponding to the screw groove 21 of the screw shaft 20 on an inner peripheral surface, a plurality of balls (not illustrated) that roll on a load raceway defined by the screw groove 21 of the screw shaft 20 and the screw groove of the nut 30, and a seal member 40 that seals a clearance between the screw shaft 20 and the nut 30.

The nut 30 is provided with, on an outer peripheral surface thereof, a plurality of circulation components (not illustrated) each penetrating the nut 30 such that two end portions thereof enter the load raceway and having a scooping portion for lifting the balls. Accordingly, the balls scooped up at one end portion of the load raceway pass through an inside of the circulation components and return to the other end portion of the load raceway, thereby implementing endless circulation paths. In FIG. 1, a reference numeral 11 denotes a circulation component cover for fixing the circulation component to the nut.

In FIG. 1, the nut 30 is provided with five circulation components, and thus five endless circulation paths are implemented.

The nut 30 is formed with a flange portion 32 on one end portion side in the axial direction, and circular recesses 33, which have an inner diameter larger than the screw grooves and are coaxial with the screw grooves, on both end portions in the axial direction. The flange portion 32 is fixed to a movable table or the like of a mechanical device (not illustrated) by a mounting bolt or the like.

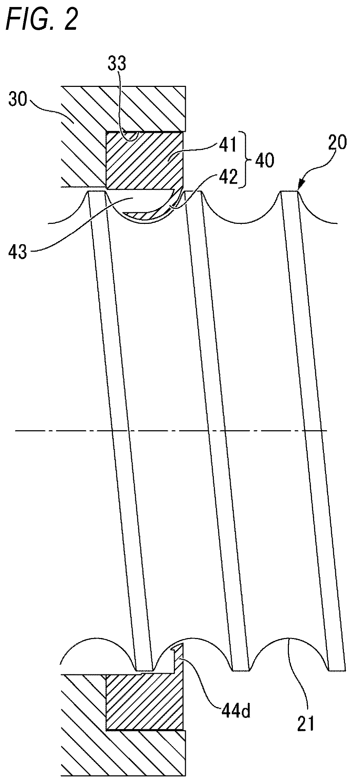

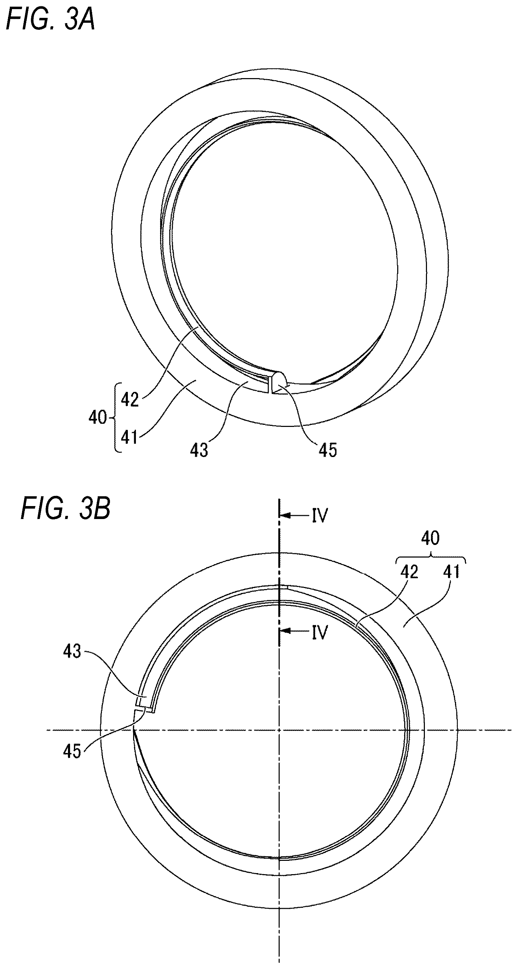

The seal member 40 that seals the clearance between the screw shaft 20 and the nut 30 is provided on an inner peripheral surface of the circular recess 33. The seal member 40, which is formed of a resin such as a polymer polyethylene resin, as illustrated in FIGS. 2 to 4, includes an annular seal body portion 41 fixed to the inner peripheral surface of the circular recess 33 of the nut 30, and a seal crest portion (seal lip) 42 formed along a circumferential direction on an inner diameter side of the seal body portion 41 to enter the screw groove 21 of the screw shaft 20 and defining a non-contact labyrinth clearance with the screw groove 21 of the screw shaft 20. The seal member 40 is formed by injection molding, and the seal crest portion 42 has a circumferential length less than one circumference, that is, slightly less than an entire circumference of an inner peripheral surface of the seal body portion 41.

Further, the seal crest portion 42 is formed with, along the circumferential direction, a cavity portion 43 cut out from one side in the axial direction toward a space between the screw groove 21 of the screw shaft 20 and the screw groove of the nut 30. The cavity portion 43 is continuously formed over an entire circumference of the seal crest portion 42. As illustrated in FIG. 2, the cavity portion 43 opens toward the space between the screw groove 21 of the screw shaft 20 and the screw groove of the nut 30 when attached to the end portion of the nut 30.

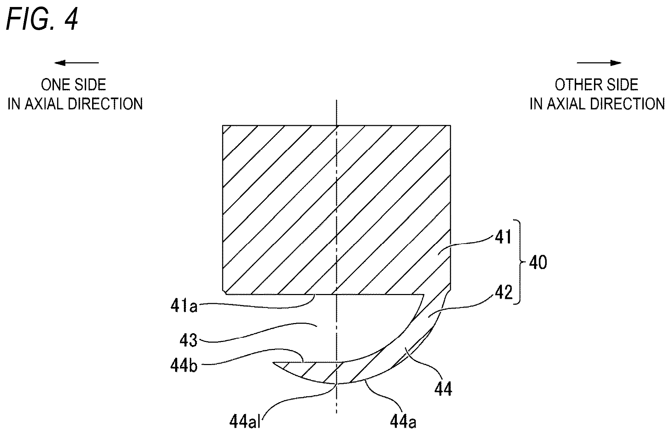

For this reason, as illustrated in FIG. 4, the seal crest portion 42 is implemented by a small-thickness wall 44 that has a substantially uniform thickness, protrudes to the inner diameter side from the inner peripheral surface of the seal body portion 41, and extends along the circumferential direction. Therefore, the small-thickness wall 44 implements an inner peripheral surface (outer wall surface) 44a of the seal crest portion 42 and an inner wall surface 44b that defines the cavity portion 43 together with an inner peripheral surface 41a of the seal body portion 41.

In the present embodiment, the small-thickness wall 44 extends, from an end portion of the seal body portion 41 on the other side in the axial direction to the inner diameter side, beyond an inner peripheral edge portion 44a1 where the inner peripheral surface 44a is on an innermost diameter side in a phase in the circumferential direction formed in an arc shape or a Gothic arch shape in cross section. However, the small-thickness wall 44 is also formed by injection molding, and thus the inner wall surface 44b of the small-thickness wall 44 in a part beyond the inner peripheral edge portion 44a1 extends along the axial direction.

Further, the seal crest portion 42 is formed with, along the axial direction at one end portion in the circumferential direction, a rib 45 that connects the inner peripheral surface 41a of the seal body portion 41 and the inner wall surface 44b of the small-thickness wall 44, and a cross-sectional shape as illustrated in FIG. 4 is obtained from the one end portion in the circumferential direction until a prescribed phase in the circumferential direction. On the other hand, when the seal crest portion 42 exceeds the prescribed phase in the circumferential direction from the one end portion in the circumferential direction, the small-thickness wall 44 has a gradually decreasing axial width, and has, on the other end side in the axial direction as illustrated in the cross section on a lower side of FIG. 2, a linear wall portion 44d extending to the inner diameter side along a radial direction from the other end portion in the axial direction. Therefore, when the seal crest portion 42 exceeds the prescribed phase in the circumferential direction from the one end portion in the circumferential direction, the cavity portion 43 has a gradually decreasing axial width toward the other end portion in the circumferential direction.

With the seal member 40 configured as described above, more grease can be retained in the cavity portion 43, and oil content of the grease accumulated in the cavity portion 43 gradually flows out and is supplied to the space between the screw groove 21 of the screw shaft 20 and the screw groove of the nut 30, so that stable lubrication can be implemented over a long period, and the ball screw 10 having a long lifetime can be implemented. The seal crest portion 42 is close to the screw groove 21 of the screw shaft 20 to which the grease is to be supplied, and can supply oil content to the screw shaft 20. For this reason, providing the cavity portion 43 serving as a grease reservoir in the seal crest portion 42 can effectively contribute to lubrication.

In addition, the seal crest portion 42 gets larger as a ball diameter increases, and thus the amount of grease retained by the cavity portion 43 also increases. In particular, the present embodiment is more effective when applied to a ball screw having a ball diameter of 1/2 in. or more in which the seal crest portion 42 has a large volume. With a larger ball diameter, the ball screw 10 has an increased load-bearing capacity and is used under harsh conditions with heavy loads. For this reason, lubrication is more necessary, and effects of the present invention can be easily obtained.

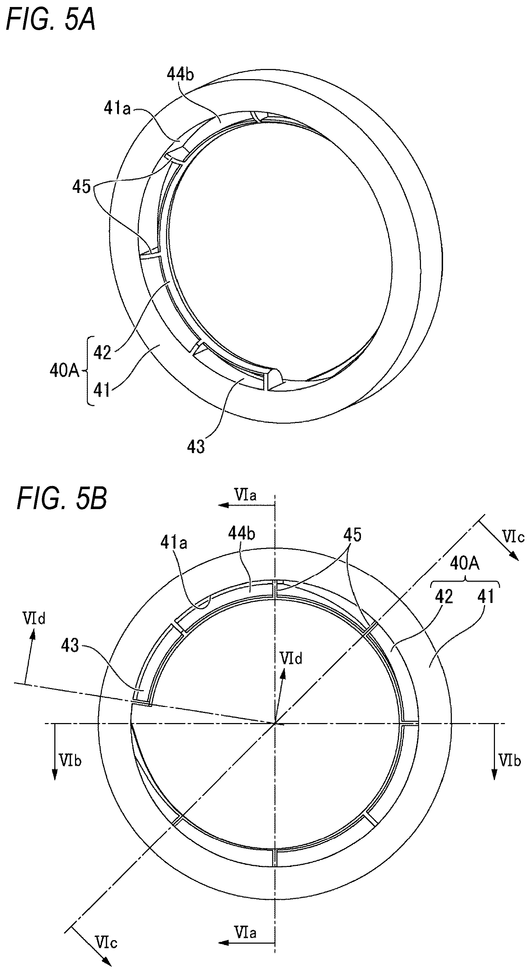

FIGS. 5A and 5B show a seal member 40A according to a first modification of the present invention. In this case, a plurality of ribs 45, which connect the inner peripheral surface 41a of the seal body portion 41 and the inner wall surface 44b of the small-thickness wall 44, extend along the axial direction inside the cavity portion 43 of the seal member 40A.

The plurality of ribs 45 are arranged at prescribed intervals in the circumferential direction except for one end portion in the circumferential direction.

In the present embodiment, the plurality of ribs 45 are connected to the inner peripheral surface 41a of the seal body portion 41 on one side in the axial direction from the inner wall surface 44b of the small-thickness wall 44. Further, the ribs 45 may have inner edge portions thereof extending from the inner wall surface 44b of the small-thickness wall 44 to the one side in the axial direction.

In the seal crest portion 42, a seal is easy to deform in a part cut out by the cavity portion 43 and sealing performance deteriorates, however, the plurality of ribs 45 can prevent the deformation of the seal and restrict the deterioration of the sealing performance. When the ball screws 10 are driven, the plurality of ribs 45 serve as scrapers to scrape off the grease, which adheres to the screw groove 21, of the screw groove 21 since the ribs 45 move along the screw groove 21 of the screw shaft 20, and block the grease inside the nut 30 from flowing out along the screw shaft 20.

The seal crest portion 42 at the position where the ribs 45 are provided has the same cross section as a cross section of the seal crest portion 42 when there is no cavity portion. A part of the seal crest portion 42 may also be cut out. The ribs 45 are arranged in a direction of extending radially from an axial center of the screw shaft 20, and may also be angled in the circumferential direction from an inner diameter side to an outer diameter side, for example.

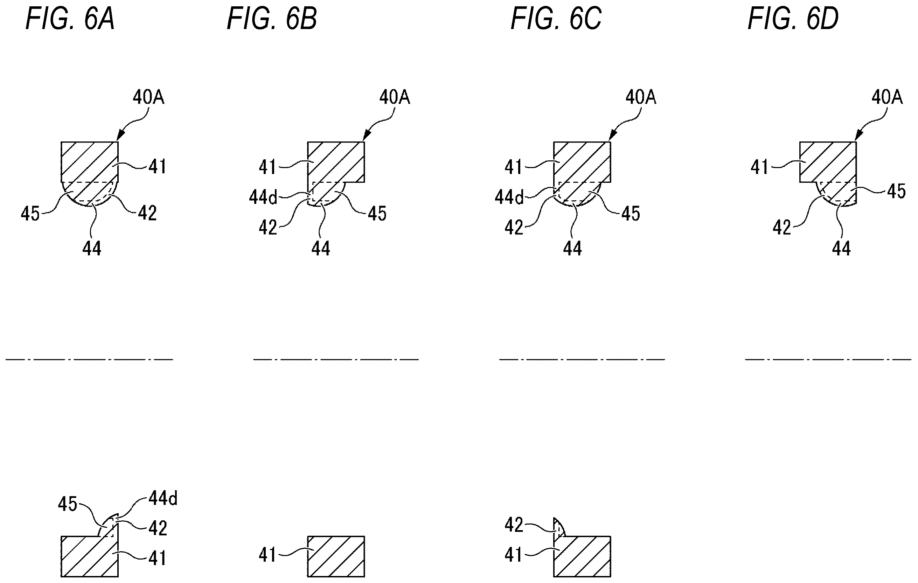

FIGS. 6A to 6D are cross-sectional views at plural phases in the circumferential direction in FIG. 5B. As described in the above embodiment, an axial position of the seal crest portion 42 is changed depending on the phases in the circumferential direction, and the small-thickness wall 44 has a part constituted by a wall portion formed in an arc shape or a Gothic arch shape in cross section, a part constituted by both the wall portion formed in an arc shape or a Gothic arch shape in cross section and the linear wall portion 44d, and a part constituted by the linear wall portion 44d depending on the phases in the circumferential direction.

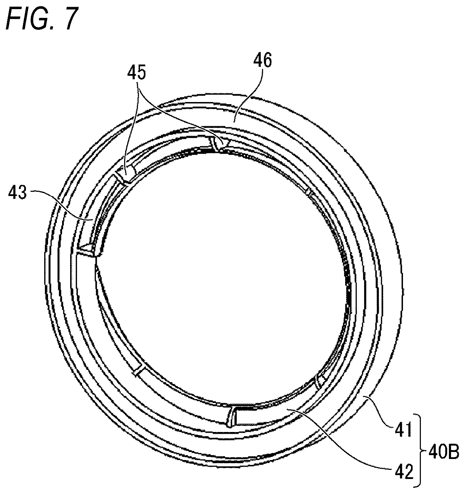

FIG. 7 illustrates a seal member 40B according to a second modification of the present invention. In the seal member 40B, in addition to the cavity portion 43 formed in the seal crest portion 42, a body-side cavity portion 46 is further formed in the seal body portion 41 over an entire circumference along the circumferential direction. Similar to the cavity portion 43, the body-side cavity portion 46 is cut out from one side in the axial direction.

In the seal member 40B, the amount of grease retained can be increased by the two cavity portions 43 and 46.

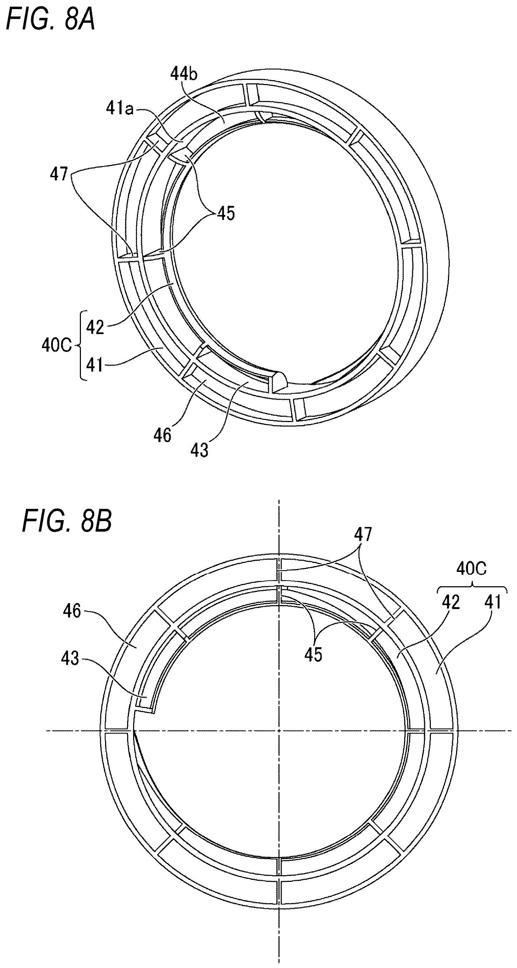

FIGS. 8A and 8B show a seal member 40C according to a third modification of the present invention. In the seal member 40C, a plurality of body-side ribs 47, which connect inner wall surfaces, that is, an outer peripheral surface, a side wall surface, and an inner peripheral surface of the body-side cavity portion 46, extend along the axial direction inside the body-side cavity portion 46. The plurality of body-side ribs 47 are arranged at prescribed intervals in the circumferential direction except for one end portion in the circumferential direction.

In this manner, providing the plurality of body-side ribs 47 inside the body-side cavity portion 46 ensures rigidity of the seal body portion 41 while retaining more grease.

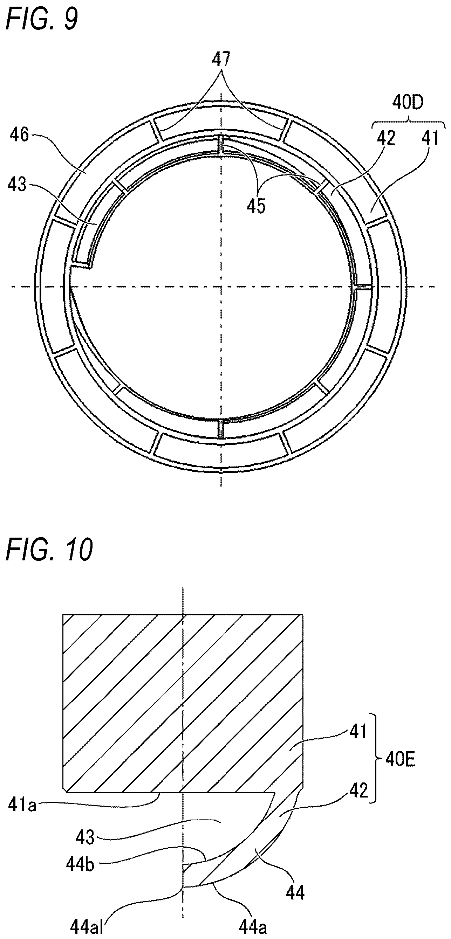

When a plurality of body-side ribs 47 are provided inside the body-side cavity portion 46, as in a seal member 40D according to a fourth modification illustrated in FIG. 9, the body-side ribs 47 are preferably apart from the plurality of ribs 45 inside the cavity portion 43 of the seal crest portion 42 in the circumferential direction. In the seal member 40C according to the third modification, the ribs 45 and 47 are opposed, and thus a shape of the seal crest portion 42 in a part where the ribs 45 are provided may be distorted due to a contraction difference between the seal body portion 41 and the seal crest portion 42 during molding.

As in the seal member 40B according to the second modification illustrated in FIG. 7, it is most preferable that the body-side ribs 47 not be provided inside the body-side cavity portion 46.

FIG. 10 illustrates a seal member 40E according to a fifth modification of the present invention. In this case, the small-thickness wall 44 extends, from an end portion of the seal body portion 41 on the other side in the axial direction to the inner diameter side, until the inner peripheral edge portion 44a1 where the inner peripheral surface 44a is on the innermost diameter side in a phase in the circumferential direction formed in an arc shape or a Gothic arch shape in cross section. When the inner peripheral surface 44a of the small-thickness wall 44 is shorter than the inner peripheral edge portion 44a1, the amount of grease retained is rapidly reduced, and thus the inner peripheral surface 44a of the small-thickness wall 44 is preferably formed until the inner peripheral edge portion 44a1 or beyond the inner peripheral edge portion 44a1 as in the above embodiment.

The present invention is not limited to the above embodiment and can be appropriately modified, improved, and the like.

As described above, following matters are disclosed in the present specification.
(1) Provided is a ball screw seal member used for a ball screw, the ball screw including a screw shaft having a spiral screw groove formed on an outer peripheral surface, a nut having a spiral screw groove formed on an inner peripheral surface, and a plurality of balls configured to roll on a load raceway defined by the screw groove of the screw shaft and the screw groove of the nut, to seal a clearance between the screw shaft and the nut, the seal member including:
   an annular seal body portion configured to be fixed to an inner peripheral surface of at least one end portion of the nut in an axial direction; and
   a seal crest portion formed on an inner diameter side of the seal body portion along a circumferential direction to enter the screw groove of the screw shaft, the seal crest portion defining a labyrinth clearance with the screw groove of the screw shaft, in which
   the seal crest portion is formed with, along the circumferential direction, a cavity portion cut out from one side in the axial direction.

According to this configuration, the cavity portion retains more grease, oil content of grease accumulated in the cavity portion is gradually supplied to the space between the screw groove of the screw shaft and the screw groove of the nut, and stable lubrication can be implemented over a long period.

(2) In the ball screw seal member according to (1),
the seal crest portion is implemented by a small-thickness wall that protrudes to the inner diameter side from an inner peripheral surface of the seal body portion and extends along the circumferential direction, and
the small-thickness wall is formed with an inner wall surface that defines the cavity portion together with the inner peripheral surface of the seal body portion.

According to this configuration, the seal crest portion can retain more grease in the cavity portion while defining the labyrinth clearance with the screw groove of the screw shaft.

(3) In the ball screw seal member according to (2),
inside the cavity portion, a plurality of ribs extend along the axial direction, the plurality of ribs connecting the inner peripheral surface of the seal body portion and the inner wall surface of the small-thickness wall.

According to this configuration, the plurality of ribs serve as scrapers, and can scrape out foreign matter coming from an outside of the nut and prevent grease inside the nut from flowing out along the screw shaft.

(4) In the ball screw seal member according to (2) or (3),
the small-thickness wall extends, from an end portion on another side in the axial direction of the seal body portion to the inner diameter side, at least until an inner peripheral edge portion on an innermost diameter side in a phase in the circumferential direction formed in an arc shape or a Gothic arch shape in cross section.

According to this configuration, more grease can be retained in the cavity portion, the foreign matter coming from the outside of the nut can be scraped out, and the grease inside the nut can be prevented from flowing out to the outside.

(5) In the ball screw seal member according to any one of (1) to (4),
the cavity portion is formed continuously or intermittently over an entire circumference of the seal crest portion.

According to this configuration, more grease can be retained in the cavity portion.

(6) In the ball screw seal member according to any one of (1) to (5),
the seal body portion is formed with, along the circumferential direction, a body-side cavity portion cut out from the one side in the axial direction.

According to this configuration, more grease can be retained in the body-side cavity portion.

(7) Provided is a ball screw including:
a screw shaft having a spiral screw groove formed on an outer peripheral surface;
a nut having a spiral screw groove formed on an inner peripheral surface;
a plurality of balls configured to roll on a load raceway defined by the screw groove of the screw shaft and the screw groove of the nut; and
the ball screw seal member according to any one of (1) to (6) sealing a clearance between the screw shaft and the nut, in which
the cavity portion opens toward a space between the screw groove of the screw shaft and the screw groove of the nut.

According to this configuration, the cavity portion retains more grease, oil content of grease accumulated in the cavity portion is gradually supplied to the space between the screw groove of the screw shaft and the screw groove of the nut, and stable lubrication can be implemented over a long period.

The present application is based on a Japanese patent application (No. 2023-066365) filed on April 14, 2023, contents of which are incorporated herein by reference.

### REFERENCE SIGNS LIST

10 ball screw
20 screw shaft
21 screw groove
30 nut
40, 40A, 40B, 40C, 40D, 40E seal member
41 seal body portion
42 seal crest portion
43 cavity portion
44 small-thickness wall
45 rib
46 body-side cavity portion
47 body-side rib

## Claims

1. A ball screw seal member used for a ball screw, the ball screw including a screw shaft having a spiral screw groove formed on an outer peripheral surface, a nut having a spiral screw groove formed on an inner peripheral surface, and a plurality of balls configured to roll on a load raceway defined by the screw groove of the screw shaft and the screw groove of the nut, to seal a clearance between the screw shaft and the nut, the seal member comprising:
an annular seal body portion configured to be fixed to an inner peripheral surface of an end portion of the nut in an axial direction; and
a seal crest portion formed on an inner diameter side of the seal body portion along a circumferential direction to enter the screw groove of the screw shaft, the seal crest portion defining a labyrinth clearance with the screw groove of the screw shaft, wherein
the seal crest portion is formed with, along the circumferential direction, a cavity portion cut out from one side in the axial direction.

2. The ball screw seal member according to claim 1, wherein
the seal crest portion is implemented by a small-thickness wall that protrudes to the inner diameter side from an inner peripheral surface of the seal body portion and extends along the circumferential direction, and
the small-thickness wall is formed with an inner wall surface that defines the cavity portion together with the inner peripheral surface of the seal body portion.

3. The ball screw seal member according to claim 2, wherein
inside the cavity portion, a plurality of ribs extend along the axial direction, the plurality of ribs connecting the inner peripheral surface of the seal body portion and the inner wall surface of the small-thickness wall.

4. The ball screw seal member according to claim 2, wherein
the small-thickness wall extends, from an end portion on another side in the axial direction of the seal body portion to the inner diameter side, at least until an inner peripheral edge portion on an innermost diameter side in a phase in the circumferential direction formed in an arc shape or a Gothic arch shape in cross section.

5. The ball screw seal member according to claim 1, wherein
the cavity portion is formed continuously or intermittently over an entire circumference of the seal crest portion.

6. The ball screw seal member according to claim 1, wherein
the seal body portion is formed with, along the circumferential direction, a body-side cavity portion cut out from the one side in the axial direction.

7. A ball screw comprising:
a screw shaft having a spiral screw groove formed on an outer peripheral surface;
a nut having a spiral screw groove formed on an inner peripheral surface;
a plurality of balls configured to roll on a load raceway defined by the screw groove of the screw shaft and the screw groove of the nut; and
the ball screw seal member according to any one of claims 1 to 6 sealing a clearance between the screw shaft and the nut, wherein
the cavity portion opens toward a space between the screw groove of the screw shaft and the screw groove of the nut.
